Europäisches Patentamt

(19) European Patent Office

Office européen des brevets

(11) Publication number: **0 283 080 B1**

## (12) EUROPEAN PATENT SPECIFICATION

(45) Date of publication of patent specification: **20.05.92**  (51) Int. Cl.⁵: **F16C  33/66**, F16N 29/00

(21) Application number: **88200414.6**

(22) Date of filing: **07.03.88**

(54) **Shaft bearing assembly.**

(30) Priority: **12.03.87 NL 8700595**

(43) Date of publication of application:
**21.09.88 Bulletin  88/38**

(45) Publication of the grant of the patent:
**20.05.92 Bulletin  92/21**

(84) Designated Contracting States:
**DE ES FR GB GR IT NL**

(56) References cited:
**GB-A- 377 645          GB-A- 781 618**
**US-A- 2 249 501        US-A- 2 331 777**
**US-A- 2 694 997        US-A- 2 858 175**
**US-A- 4 227 646**

(73) Proprietor: **SKF Industrial Trading & Develop-
ment Co, B.V.
Kelvinbaan 16
NL-3439 MT Nieuwegein(NL)**

(72) Inventor: **Gabelli, Antonio
Briljanthof 2
Ijsselstein(NL)**
Inventor: **Dolfsma, Hendrik
Strijpweg 6
Tull en 't Waal(NL)**

(74) Representative: **Merkelbach, B.
SKF Engineering & Research Centre B.V.
P.O. Box 2350
NL-3430 DT Nieuwegein(NL)**

## Description

The invention relates to a shaft bearing assembly comprising a housing having one or more rolling bearings therein, through which a shaft protrudes on at least one side, which housing is provided with sealing means acting on the shaft as well as with an inlet opening for supply of lubricant,an outlet opening for excess spent lubricant and wherein a temperature-sensitive outlet valve is arranged.

Such a bearing assembly is disclosed by the British patent GB-A-781618. According to this known assembly superfluous lubricant is released via a mechanical spring actuated valve.

The invention seeks to provide a fast reacting and much better controllable operating solution to the problem, and to that end is characterised in that said outlet and inlet openings are arranged on each side of the rolling bearings and in that said temperature-sensitive outlet valve having a valve housing comprises a temperature-memory spring due to which said valve opens and closes at predetermined temperatures.

This invention is generally very useful when automatic lubrication systems are applied e.g. rows of bearing assemblies which support a (long) shaft.

According a preferably embodiment, a valve body is connected to the temperature-memory-spring which body is provided with a sealing member that can co-operate with the valve housing.

Further, in certain applications of the bearing assembly it may be desirable to be able to register afterwards that the outlet valve was open in service because of an elevation of temperature. For this purpose the outlet valve is provided with an indicator consisting of a chemical element or a coating layer that changes colour when the temperature rises above a predetermined threshold.

In case of limited space or poor visibility, it may be advantageous when the outlet valve is arranged in a separate adapter which fits in the bearing housing.

It may be noted that likewise in case of a deficiency of lubricant a temperature rise might occur whereby the outlet valve would be opened. However, this situation hardly will arise in practise because an excess of lubricant is more likely to occur than a deficiency.

The invention will now be further illustrated with reference to embodiments represented by way of example in the drawing, where:

Fig. 1 shows a longitudinal section of a shaft bearing assembly to which the invention may be applied, and

Fig. 2 shows a detail of Fig. 1, to a larger scale, having an outlet valve according to the present invention accommodated in the bearing housing.

The figures show a shaft bearing assembly 1 consisting of a bearing housing 2 in which a rolling bearing 3 is installed. The housing 2 is further equipped with sealing means 4 acting on the shaft 5. These sealing means 4 may for example consist of felt rings, oil sweep rings, lip seals, labyrinth seals and the like.

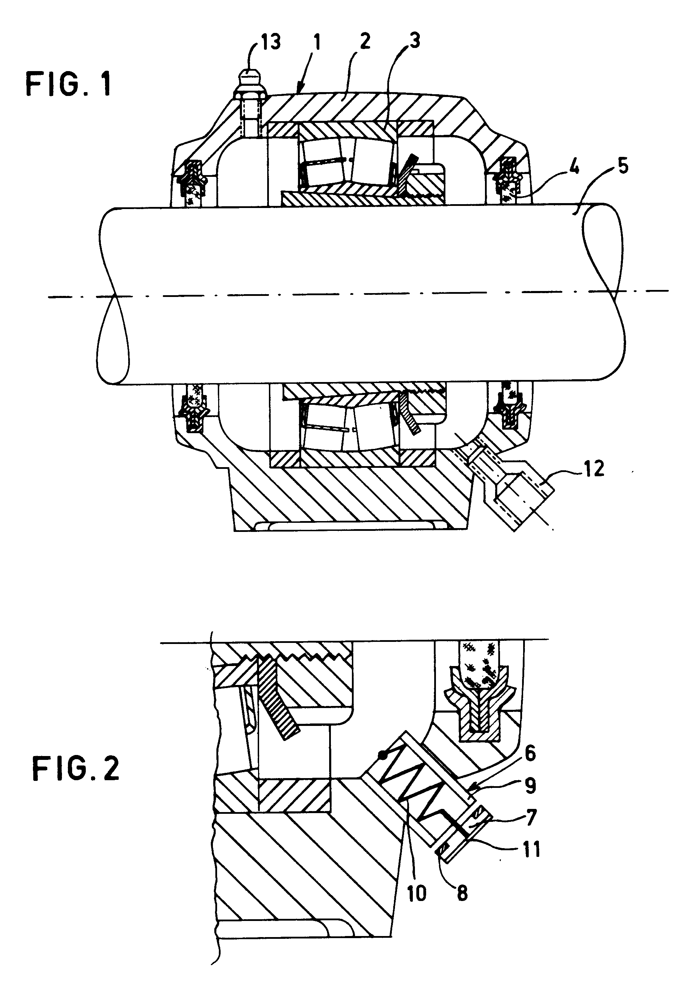

The outlet valve 6, shown specifically in Fig. 2, consists of a valve body 7, which may be provided with a sealing member 8. In the closed state of the outlet valve 6, the valve member 7 is in sealing contact with a valve housing 9. The valve member 7 is actuated by intervention of a temperature-sensitive element 10, for example a thermostat element or a "temperature memory spring."

Preferably the valve member 7 and the valve housing 9 are in different, contrasting colors.

The valve member 7 may be further equipped with an indicator 11 indicating that the temperature of the outlet valve reached a value at which the valve opened.

The outlet valve need not be installed directly in the bearing housing 2, as represented in Fig. 2, but may alternatively be installed in an adaptor 12. The adaptor 12 is shown in Fig. 1, in which figure a lubricant supply nipple is designated by 13.

## Claims

1. Shaft bearing assembly (1) comprising a bearing housing (2) having one or more rolling bearings (3) therein, through which a shaft (5) protrudes on at least one side, which housing is provided with sealing means (4) acting on the shaft (5) as well as with an inlet opening for supply of lubricant, an outlet opening for excess spent lubricant and wherein a temperature-sensitive outlet valve (6) is arranged, characterised in that said inlet and outlet openings are arranged on each side of said rolling bearings (3) and in that said temperature-sensitive outlet valve (6) having a valve housing (9) comprises a temperature-memory spring (10) due to which said valve (6) opens and closes at predetermined temperatures.

2. A bearing assembly according to claim 1, characterised in that to said temperature-memory-spring (10) a valve body (7) is connected provided with a sealing member (8) which co-operates with the valve housing (9).

3. A bearing assembly according to claim 1 and 2, characterised in that said outlet valve (6) is provided with an indicator (11) consisting of a chemical element or a coating layer that changes colour when the temperature rises above a predetermined threshold.

4. A bearing assembly according to any of the preceding claims, characterised in that said outlet valve (6) is arranged in a separate adapter (12) which fits in said bearing housing (2).

## Revendications

1. Palier d'arbre (1) comprenant un corps (2) de palier contenant un ou plusieurs roulements (3) à travers lesquels un arbre (5) s'étend sur au moins un de ses cotés, ce corps étant pourvu de moyens d'étanchéité (4) agissant sur l'arbre (5) ainsi que d'une ouverture d'entrée pour l'alimentation en lubrifiant, une ouverture de sortie pour le lubrifiant utilisé excédentaire et dans laquelle une valve de sortie (6) sensible à la température est disposée, caractérisé en ce que les ouvertures d'entrée et de sortie sont disposées de part et d'autre des roulements (3) et en ce que la valve de sortie (6) sensible à la température comportant un corps (9) de valve comprend un ressort (10) à mémoire de température grâce auquel la valve (6) s'ouvre et se ferme à des températures prédéterminées.

2. Palier selon la revendication 1, caractérisé en ce qu'au ressort (10) à mémoire de température est fixé un obturateur (7) de valve muni d'un élément d'étanchéité (8) qui coopère avec le corps (9) de valve.

3. Palier selon les revendications 1 et 2, caractérisé en ce que la valve (6) de sortie est pourvue d'un indicateur (11) consistant en un élément chimique ou une couche de revêtement qui change de couleur lorsque la température augmente au-dessus d'un seuil prédéterminé.

4. Palier selon l'une quelconque des revendications précédentes, caractérisé en ce que la valve (6) de sortie est disposée dans un adaptateur séparé (12) qui s'ajuste dans le corps (2) du palier.

## Patentansprüche

1. Wellenlager (1) mit einem Lagergehäuse (2), welches ein oder mehrere Wälzlager (3) enhält, aus denen wenigstens einseitig eine Welle (5) herausragt, und welches mit gegen die Welle (5) wirkenden Dichtungsmitteln (4) sowie einer Einlaßöffnung für die Zufuhr von Schmiermittel und einer Auslaßöffnung für überschüssiges Schmiermittel versehen ist, und worin ein temperaturabhänig gesteuertes Auslaßventil (6) angeordnet ist, **dadurch gekennzeichnet,** daß die Einlaß- und Auslaßöffnungen auf den beiden Seiten der Wälzlager (3) angeordnet sind und daß das mit einem Ventilgehäuse (9) versehene, temperaturabhängig gesteuerte Auslaßventil (6) eine Feder (10) aus einem Temperatur-Memorymaterial aufweist, durch welche das Ventil (6) bei bestimmten Temperaturen öffnet und schließt.

2. Lager nach Anspruch 1, **dadurch gekennzeichnet,** daß mit der Feder (10) aus Temperatur-Memorymaterial ein Ventilkörper (7) verbunden ist, der mit einem Dichtungsglied (8) versehen ist, welches mit dem Ventilgehäuse (9) zusammenwirkt.

3. Lager nach Anspruch 1 oder 2, **dadurch gekennzeichnet,** daß das Auslaßventil (6) mit einem Anzeigemittel (11) versehen ist, das aus einem chemischen Element oder einer Deckschicht besteht, welche ihre Farbe ändert, wenn die Temperatur einen bestimmten Grenzwert übersteigt.

4. Lager nach einem der vorhergehenden Ansprüche, **dadurch gekennzeichnet,** daß das Auslaßventil (6) in einem besonderen Adapter (12) angeordnet ist, welcher in das Lagergehäuse (2) paßt.

FIG. 1

FIG.2